# EUROPÄISCHE PATENTSCHRIFT

(11) **EP 2 949 489 B1**
(45) Veröffentlichungstag und Bekanntmachung des Hinweises auf die Patenterteilung: **30.11.2016**
(21) Anmeldenummer: 15166261.6
(22) Anmeldetag: 04.05.2015
(51) Int. Cl.: B60C 27/00

(54) **FELGENSCHUTZELEMENT FÜR EINE FAHRZEUG-GLEITSCHUTZVORRICHTUNG**
RIM PROTECTION ELEMENT FOR A VEHICLE SLIDING PROTECTION DEVICE
DISPOSITIF DE PROTECTION DE JANTE POUR UN DISPOSITIF DE PROTECTION ANTIDÉRAPANT POUR VÉHICULE

(30) Priorität: 12.05.2014 DE 202014102213 U
(43) Veröffentlichungstag der Anmeldung: 02.12.2015
(73) Patentinhaber: RUD Ketten Rieger & Dietz GmbH u. Co. KG, 73432 Aalen (DE)
(72) Erfinder: Sieber, Frank, 73432 Aalen (DE)
(74) Vertreter: Grünecker Patent- und Rechtsanwälte PartG mbB

(56) Entgegenhaltungen:
- EP-A1- 2 163 408
- EP-A1- 2 653 325

## Beschreibung

Die Erfindung betrifft ein Felgenschutzelement für eine Fahrzeug-Gleitschutzvorrichtung.

Gleitschutzvorrichtungen sind Vorrichtung zur Erhöhung der Kraftübertragung zwischen Reifen von Kraftfahrzeugen und schneebedeckten, vereisten Fahrbahnen oder schmierigen, schlammigem Gelände. Gemäß ihrem häufigsten Einsatzgebiet werden sie auch als Schneeketten bezeichnet.

Gleitschutzvorrichtungen weisen ein Laufnetz auf. Das sind diejenigen Teile, die unmittelbar mit der Lauffläche des Reifens und der Fahrbahn in Kontakt stehen und zur Traktionserhöhung dienen. Die einzelnen Elemente des Laufnetzteils, wie zum Beispiel Seil- oder Kettenstränge, können von Gleitschutzvorrichtung zu Gleitschutzvorrichtung variieren.

Um die Gleitschutzelemente gegen seitliches Verrutschen zu sichern, sind an der Reifeninnen- und Reifenaußenseite Halte- bzw. Spannmittel vorgesehen. Die Spannmittel können ein in Umfangsrichtung zusammenziehbares Zugmittel, zum Beispiel ein Drahtbügel oder ein Kettenstrang, sein.

Problematisch ist, dass diese Halte- bzw. Spannmittel die Felge beschädigen können.

Felgenschutzeinrichtungen sind unter anderem in den Dokumenten EP 2 653 325 A1 und EP 2 163 408 A1 genannt.

Der Erfindung liegt folglich die Aufgabe zugrunde, Maßnahmen zu treffen, um eine Beschädigung der Felgen durch Gleitschutzvorrichtungen möglichst zu vermeiden.

Gelöst wird diese Aufgabe erfindungsgemäß durch ein Felgenschutzelement für eine Fahrzeug-Gleitschutzvorrichtung, wobei das Felgenschutzelement um eine Längsachse zusammenklappbar ausgestaltet ist und an aufeinander zu klappbaren Flügeln mit zueinander komplementären Verbindungselementen versehen ist, und wobei die Flügel an jeweils entgegengesetzten Seiten in Richtung der Längsachse vorspringende Ohren aufweisen, die mit zueinander komplementären Befestigungselementen versehen sind.

Mit diesem einfachen Aufbau lässt sich das Felgenschutzelement um das Spannmittel einer Gleitschutzvorrichtung herumlegen, indem es zusammengeklappt und in der geklappten Stellung durch die Verbindungselemente gehalten wird. Die vorspringenden Ohren erlauben es, mehrere Felgenschutzelemente in Richtung der Längsachse nebeneinander überlappend in Form einer Kette anzubringen, so dass in Umfangsrichtung des Reifens aufeinanderfolgende Felgenschutzelemente segmentartig das Spannmittel abdecken und somit die Felge schützen können. Der Zusammenhalt der Felgenschutzelemente ist durch die komplementären Befestigungsmittel der Ohren gewährleistet.

Wie im Folgenden näher erläutert ist, lässt sich die erfindungsgemäße Lösung durch eine Reihe von jeweils für sich vorteilhaften, voneinander unabhängigen und beliebig miteinander kombinierbaren Ausgestaltungen weiter verbessern.

So kann beispielsweise der Flügel an der einem Ohr in Richtung der Längsachse gegenüberliegenden Seite eine Aussparung aufweisen. Insbesondere bei einer Anordnung der Felgenschutzelemente nebeneinander auf dem Spannmittel kann im zusammengeklappten und montierten Zustand das Ohr des einen Felgenschutzelements in die Aussparung des anderen, benachbarten Felgenschutzelements ragen. So ergibt sich eine gute Überlappung nebeneinander liegender Felgenschutzelemente, die zum einen einen guten Schutz bildet und zum anderen auch das Eindringen von Dreck, Matsch und Schnee verhindert. Um eine möglichst große Fläche für die Überlappung bereitzustellen, sollten sich die Ohren nebeneinander liegender Felgenschutzelemente überlappen, wenn die Felgenschutzelemente an einer auf den Reifen aufgezogenen Gleitschutzvorrichtung montiert sind. Vorteilhaft ist dabei, wenn die Aussparung komplementär zu einem Ohr ausgestaltet ist, so dass sich bei Überlappung ein exakter Sitz des Ohrs in der Aussparung einstellt.

Gemäß einer vorteilhaften Ausgestaltung erlauben die Verbindungselemente eine drehbare Befestigung nebeneinander angeordneter Felgenschutzelemente.

Im zusammengeklappten Zustand des Felgenschutzelements, wenn das Spannmittel zwischen den Flügeln liegt, ist bevorzugt eine Innenfläche des Ohrs von außen zugänglich. Die von außen zugängliche Innenfläche kann von der Aussparung des umgeklappten, gegenüberliegenden Flügels freigegeben sein. Insbesondere ist es sinnvoll, wenn die von außen zugängliche Innenfläche mit dem Verbindungselement versehen ist. Beispielsweise kann sie flächig mit einem Klettverschluss versehen sein. Als Befestigungsmittel können auch zusätzlich oder alternativ zu einem Klettverschluss Druckknöpfe, Klemmen, beispielsweise Fastex-ähnliche Klemmen mit Gurtabschnitten, Nieten und ähnliches verwendet werden. Die Flügel können auch zusammengenietet oder stoffschlüssig miteinander verbunden sein.

Die von dem Verbindungselement und/oder Befestigungselement bewirkte Fixierung kann in einer Ausgestaltung von Hand lösbar sein, um die Felgenschutzelemente bei der Montage oder Demontage der Gleitschutzvorrichtung und/oder zu Reinigungszwecken montieren oder demontieren zu können.

Sind die Flügel der Felgenschutzelemente beispielsweise durch Vernähen, Vernieten, Kleben und/oder Verschweißen unlösbar miteinander verbunden, dann müssen sie zur Montage auf das Spannmittel aufgeschoben oder im auf der Gleitschutzvorrichtung montierten Zustand fertig gestellt, also vernäht, vernietet, verklebt und/oder verschweißt werden.

Die Ohren können bei den sich bezüglich der Längsachse diagonal gegenüberliegenden Ecken des Felgenschutzelements den aufgeklappten Zustand bilden. Die Aussparungen können die sich bezüglich der Längsachse diagonal gegenüberliegenden Ecken des Felgenschutzelements bilden. Das Felgenschutzelement weist bevorzugt eine rotationssymmetrische Grundfläche sowohl im ausgeklappten also auch im zusammengeklappten Zustand auf. Dies ermöglicht es, dass nebeneinander liegende Felgenschutzelemente aneinander liegende Seiten aufweisen, die mit komplementären Konturen versehen sind. Dank einer solchen Ausgestaltung können die zusammengeklappten Felgenschutzelemente durch größere Lücken kettenartig miteinander verbunden werden.

Um eine möglichst große Überlappung mit dem benachbarten Felgenschutzelement zu ermöglichen, können die Ohren sich quer zur Richtung der Längsachse über mehr als die Hälfte der Höhe eines Flügels, bevorzugt jedoch über die gesamte Höhe des Flügels bzw. um etwa die Hälfte der Höhe des Felgenschutzelements in Richtung quer zur Längsachse erstrecken.

Die Verbindungselemente und/oder die Befestigungselemente können sich in einer Ausgestaltung über den größten Teil der aufeinander zu klappbaren Innenflächen der Flügel erstrecken. Die Verbindungselemente können flächig ausgestaltet sein, beispielsweise in Form von Flecken von Klettverschlüssen. Die Verbindungselemente und die Befestigungselemente eines Flügels können von einem durchgängigen Element, beispielsweise einem einzigen Klettverschluss-Flecken gebildet sein. Der Klettverschluss-Flecken kann auf ein Trägermaterial aufgebracht sein.

Entlang der Längsachse des Felgenschutzelements kann an der Innenfläche, die zum Zusammenklappen aufeinander zu geklappt wird, eine Aufnahme für das Spannmittel gebildet sein. Die Oberflächenbeschaffenheit der Aufnahme kann sich von der Oberflächenbeschaffenheit der Flügel zumindest an deren Außenseiten unterscheiden. Beispielsweise kann im Bereich der Längsachse eine Verstärkung eingearbeitet sein. Alternativ oder kumulativ kann auch das flächige Verbindungselement und/oder Befestigungselement in diesem Bereich fehlen.

Das Felgenschutzelement kann mit oder aus einem biegeschlaffen Material gefertigt sein, beispielsweise aus einem Bogenmaterial, einem Planenstoff, einem Gewebe, einem Gewirke, einer Folie oder einem ähnlichen Extrudat oder ein Laminat mit wenigstens einem dieser Materialen enthalten.

Die Erfindung betrifft auch eine Gleitschutzvorrichtung für Kraftfahrzeugreifen, beispielsweise eine Schneekette, mit einem zugmittelförmigen Spannmittel, das im montierten Zustand der Gleitschutzvorrichtung auf einer Radaußenseite sich in Umfangsrichtung erstreckend liegt, wobei das Spannmittel zumindest größtenteils mit einer Mehrzahl von Felgenschutzelementen in einer der obigen Ausgestaltungen abgedeckt ist. In den Felgenschutzelementen kann das Spannmittel aufgenommen sein. Wenigstens ein Ohr eines Felgenschutzelements kann mit dem Flügel eines benachbarten Felgenschutzelements verbunden sein, vorzugsweise an einer Stelle, in der der gegenüberliegende Flügel ausgespart ist.

Die Felgenschutzelemente sind bevorzugt zusammengeklappt, so dass sie eine Tasche bilden. In der Kehle der zusammengeklappten Felgenschutzelemente kann das Spannmittel angeordnet sein. Das Ohr des einen Felgenschutzelements ist bevorzugt mit Hilfe eines Befestigungselements mit dem Flügel des benachbarten Felgenschutzelements verbunden.

Die Fläche, entlang der die Flügel eines Felgenschutzelementes im zusammengeklappten Zustand aufeinander liegen, erstreckt sich bevorzugt mehrere Durchmesser, beispielsweise zwischen zwei und zehn Durchmesser, des Spannmittels vom Spannmittel weg. Ist der Flügel an der Gleitschutzvorrichtung montiert, erstreckt er sich bevorzugt wenigstens zwischen zwei Knotenstellen, an denen das Laufnetz mit dem Spannmittel verbunden ist. Bei einer solchen Ausgestaltung bilden die Flügel eine große Schutzfläche für die Felgen, die sich weit über das Spannmittel hinaus erstreckt. Die Felgenschutzelemente können an einer Außenfläche mit Markierungen versehen sein, beispielsweise mit optischen Montagehilfen, Wasser- und Gefahren hinweisen. Die Tasche, in der das Spannmittel aufgenommen ist, nimmt gegenüber den Flügeln einen kleineren Teil der Grundfläche des zusammengeklappten Felgenschutzelementes ein, beispielsweise weniger als 20 %.

Insbesondere können die beiden Ohren zweier aufeinanderfolgender Felgenschutzelemente miteinander verbunden sein bzw. aufeinander aufliegen. So kann das Ohr des außen liegenden, vom Rad weg weisenden Flügels des einen Felgenschutzelements mit dem Ohr des inneren, am Fahrzeugrad anliegenden Flügels des anderen, benachbarten Felgenschutzelements jeweils verbunden sein.

Die beiden im zusammengeklappten Zustand des Felgenschutzelements aufeinanderliegenden Flügel sind bevorzugt radial innerhalb des Spannmittels angeordnet, um die Felge abzudecken. Um Längenänderungen des Spannmittels, beispielsweise bei Reifen unterschiedlichen Durchmessers, ausgleichen zu können, kann wenigstens ein Felgenschutzelement ein Ohr aufweisen, das im Vergleich zu den Ohren der übrigen Felgenschutzelemente verlängert ist. Ein solches verlängertes Ohr erlaubt eine Verbindung zwischen zwei aufeinander folgenden Felgenschutzelementen, wenn sich zwischen ihnen der Abstand vergrößert, weil beispielsweise die Gleitschutzvorrichtung an einen größeren oder kleineren Reifen eines anderen Fahrzeugs angepasst werden muss.

Das verlängerte Ohr kann mit einem Befestigungselement so versehen sein, dass es entlang seiner Längserstreckung an mehreren Stellen mit dem Ohr eines anderen Felgenschutzelements verbunden werden kann. Beispielsweise kann das verlängerte Ohr über seine gesamte Länge mit einem Klettband versehen sein.

Schließlich betrifft die Erfindung noch einen Satz mit einer Mehrzahl von Felgenschutzelementen in einer der obigen Ausgestaltungen, wobei wenigstens ein Felgenschutzelement ein gegenüber wenigstens einem weiteren Felgenschutzelement verlängertes Ohr aufweist. Dieses Ohr kann, wie ebenfalls oben bereits beschrieben ist, unterschiedliche Ausgestaltungen aufweisen. Alternativ können die Felgenschutzelemente eines Satzes auch gleich lang ausgestaltet sein.

Im Folgenden ist die Erfindung anhand einer Ausführungsform beispielhaft mit Bezug auf die beigefügten Zeichnungen näher erläutert. Nach Maßgabe der obigen Ausführungen kann die bei der nachstehenden Ausführungsform gezeigte Merkmalskombination abgeändert werden, indem weitere Merkmale hinzugefügt werden oder auf bestehende Merkmale verzichtet wird, je nachdem, ob es bei einer speziellen Anwendung auf den mit diesem Merkmal verbundenen Vorteil ankommt.

Der Einfachheit halber sind in den Figuren für Elemente, die sich hinsichtlich Funktion und/oder Aufbau entsprechen, jeweils dieselben Bezugszeichen verwendet.

Es zeigen:
- Fig. 1: eine schematische Draufsicht auf ein erfindungsgemäßes Felgenschutzelement im aufgeklappten Zustand;
- Fig. 2: eine schematische Perspektivansicht einer montierten Gleitschutzvorrichtung mit erfindungsgemäßen Felgenschutzelementen während der Anbringung;

- Fig. 3: eine Gleitschutzvorrichtung mit erfindungsgemäßen Felgenschutzelementen im fertig montiertem Zustand.

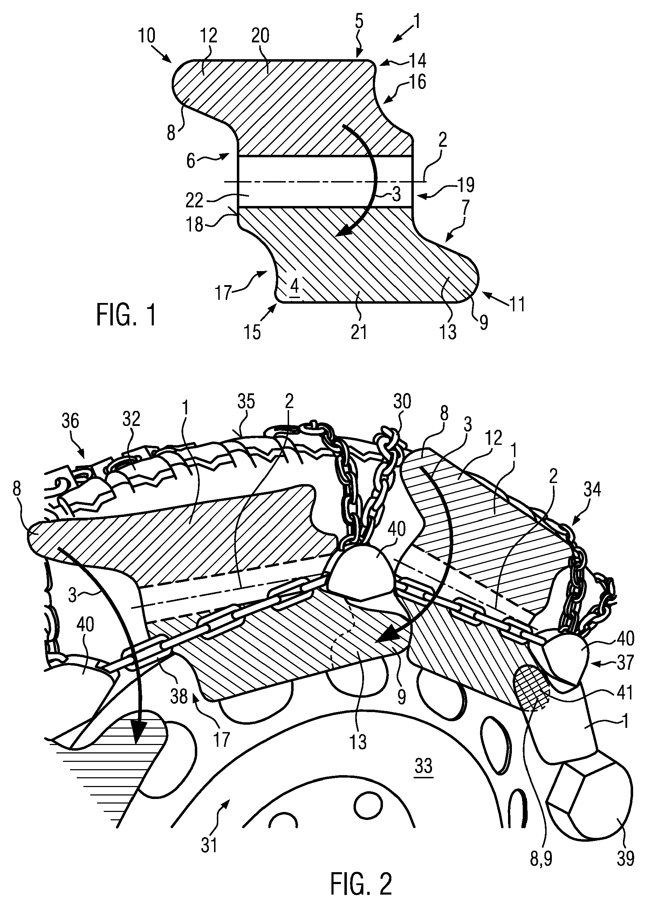

Zunächst wird der Aufbau eines Felgenschutzelement 1 anhand der Fig. 1 erläutert. Das Felgenschutzelement 1 ist ein Flachkörper mit einigen wenigen Millimetern Dicke, vorzugsweise aus einem biegeschlaffen Material, einem planen Material oder gewebten oder gewirkten Textilstoffen.

Das Felgenschutzelement 1 ist ausgestaltet, entlang einer Längsachse 2 umgeklappt zu werden, wie der Pfeil 3 andeutet.

Fig. 1 zeigt den Blick auf eine Innenfläche 4 des Felgenschutzelements 1. Die Innenfläche ist diejenige Fläche, die nach dem Zusammenklappen innen liegt. Die Außenfläche 5 weist bei zusammengeklapptem Felgenschutzelement 1 nach außen.

Das Felgenschutzelement 1 weist zwei Flügel 6, 7 auf, die sich zu beiden Seiten der Längsachse 2 befinden. Vorzugsweise ist jeder Flügel 6, 7 mit einem Ohr 8, 9 versehen, das in Richtung der Längsachse 2 vorspringt. Durch das Zusammenklappen des Felgenschutzelements 1 werden die beiden Flügel 6, 7 flächig aufeinander gelegt.

Die Flügel 8, 9 sind an sich diagonal gegenüberliegenden Ecken 10, 11 des Felgenschutzelements 1 angeordnet. Sie springen in entgegengesetzter Richtung vor.

Die Ohren 8, 9 sind mit zueinander komplementären Befestigungselementen 12, 13 versehen. Das bedeutet, dass das Befestigungselement 12 des Ohrs 8 mit dem Befestigungselement 13 des anderen Ohrs in Eingriff gebracht werden kann. Auf diese Weise können nebeneinander liegende Felgenschutzelemente kettenförmig miteinander verbunden werden, wie nachstehend zur Fig. 2 noch erläutert ist. Die Ohren 8, 9 bilden auf diese Weise eine Art Befestigungslappen.

An den in Richtung der Längsachse 2 den Ohren 8, 9 gegenüberliegenden Ecken 14, 15 ist das Felgenschutzelement 1 jeweils mit einer Aussparung 16, 17 versehen. Hier springt ein Rand 18 des Felgenschutzelements 1 gegenüber einem Bereich 19 um die Längsachse 2 jeweils zurück. Im zusammengeklappten Zustand des Felgenschutzelements geben die Aussparungen 16, 17 eine größere Fläche der Ohren 8, 9 frei, so dass sich benachbarte Felgenschutzelemente 1 großflächiger überlappen können.

Eine solche Ausgestaltung ist insbesondere dann sinnvoll, wenn die Befestigungselemente 12, 13 flächig sind, wie das beispielsweise bei einem Klettverschluss der Fall ist. Allerdings können auch andere Formen von Befestigungselementen 12, 13 alternativ oder zusätzlich zu Klettverschlüssen verwendet werden, beispielsweise Schlaufen, Knöpfe, Klemmen und Ähnliches.

Um die beiden Flügel 6, 7 im zusammengeklappten Zustand zu fixieren, sind diese mit zueinander komplementären Verbindungselementen 20, 21 versehen. Lediglich beispielhaft ist in Fig. 1 gezeigt, dass auch für die Verbindungselemente 20, 21 ein Klettverschluss auf der Innenfläche 4 Verwendung finden kann. Insbesondere können das Befestigungselement 12 und das Verbindungselement 20 des einen Flügels 6 sowie das Befestigungselement 13 und das Verbindungselement 21 des anderen Flügels 7 identisch bzw. einstückig ausgebildet sein. Bei dem Ausführungsbeispiel der Fig. 1 erfolgt dies dadurch, dass der Flügel 6, 7 jeweils größtenteils an der Innenfläche 4 jeweils mit einem flächigen Klettverschluss versehen ist. Der Klettverschluss kann als passgenauer Flecken einfach auf den Flügel 6, 7 aufgenäht und/oder aufgeklebt sein.

Es ist von Vorteil, wenn sich die Befestigungselemente 12, 13 und/oder die Verbindungselemente 20, 21 trotz eines festen Halts im verbundenen Zustand von Hand lösen lassen, so dass eine Montage und Demontage der Felgenschutzelemente 1 auch bei widrigen Bedingungen von Hand erfolgen kann.

Wie Fig. 1 ferner zeigt, kann in einem Bereich um die Längsachse 2 die Oberflächenbeschaffenheit der Innenfläche 4 anders sein als im Bereich der Flügel 6, 7. Auf diese Weise kann eine Aufnahme 22 um die Längsachse 2 geschaffen werden, in der ein Spannmittel (in Fig. 1 nicht gezeigt) einer Gleitschutzvorrichtung zu liegen kommt.

Die Grundfläche des Felgenschutzelements 1 ist rotationssymmetrisch, um eine Verkettung von vorzugsweise in Richtung der Längsachse nebeneinander liegenden Felgenschutzelementen zu ermöglichen.

Fig. 2 zeigt eine Gleitschutzvorrichtung 30, die auf ein Fahrzeugrad 31 montiert ist. Das Fahrzeugrad 31 weist einen Reifen 32 und eine Felge 33 auf.

Die Gleitschutzvorrichtung 30 liegt mit ihrem Laufnetz 34 auf einer Lauffläche 35 des Reifens 32 auf.

Um das Laufnetz 34 gegen seitliches Abfallen zu sichern und gleichzeitig über die Lauffläche 35 zu straffen, sind an der einer nicht dargestellten Karosserie zugewandten Radinnenseite 36 und an der in Fig. 2 dargestellten Radaußenseite 37 Spannmittel 38 vorhanden.

Die Spannmittel 38 können insbesondere zugmittelförmig ausgestaltet sein und beispielsweise in Form eines Drahtes, Seils oder in Form von Kettensträngen vorliegen. Lediglich beispielhaft sind in Fig. 2 Kettenstränge als Spannmittel 38 gezeigt. Mittels einer Spanneinrichtung 39, beispielsweise einer Ratsche, wird das Spannmittel in Umfangsrichtung des Rades 31 gespannt, so dass sich sein Durchmesser verkleinert und das Laufnetz 34 in axialer Richtung über die Lauffläche gezogen wird.

Um eine Beschädigung der Felge 33 zu vermeiden, werden die Felgenschutzelemente 1 um das Spannmittel 38 gelegt.

Das Spannmittel 38 kann durch Knotenstellen 40, an denen das Laufnetz 34 mit dem Spannmittel 38 verbunden ist, in Umfangsrichtung segmentiert sein. Bevorzugt ist jedes Segment mit genau einem Felgenschutzelement 1 versehen.

Zur Montage werden die Felgenschutzelemente 1 zwischen das Spannmittel 38 und das Rad 31 gelegt, bis sich das Spannmittel 38 etwa auf Höhe der Längsachse 2, also, soweit vorhanden, in der Aufnahme 22, befindet. Dann werden die Felgenschutzelemente 1 entsprechend dem Pfeil 3 zusammengeklappt. Dadurch entsteht eine Tasche, in der das Spannmittel 38 aufgenommen ist. Die Verbindungselemente 20, 21 halten das Felgenschutzelement 1 in zusammengeklapptem Zustand.

Wie Fig. 2 zeigt, ragt aufgrund der komplementären Ausgestaltung der aufeinander zu weisenden, in Richtung der Längsachse 2 gelegenen Seiten die Ohren 8, 9 jeweils in die Aussparungen 16, 17. Dies ist Folge der Rotationssymmetrie des Felgenschutzelements 1.

Daraus ergibt sich, dass beim Zusammenklappen das eine, innere, Ohr 8 des einen Felgenschutzelements 1 mit dem anderen, äußeren, Ohr 9 jenseits der Längsachse 2 des benachbarten Felgenschutzelements 1 in Überlappung gebracht wird. Mittels der Befestigungselemente 12, 13 werden die Ohren 8, 9 miteinander befestigt, so dass sich ein Zusammenhalt der entlang des Spannmittels 38 aufgereihten Felgenschutzelemente 1 in einer Art Kette ergibt. Durch das Vorspringen der Ohren 8, 9 können die Knotenstellen 40 überbrückt werden. An den beiden in Fig. 2 rechten Felgenschutzelementen 1 ist der Überlappungsbereich 41 der Ohren 8, 9 gezeigt.

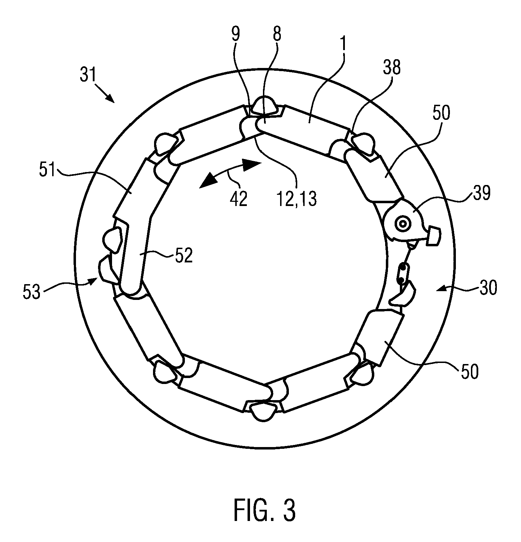

Sind alle Felgenschutzelemente 1 montiert, ergibt sich beispielsweise das in Fig. 3 gezeigte Bild. Die Felgenschutzelemente 1 sind entlang des Spannmittels 38, also in Umfangsrichtung 42 aufgereiht und an ihren Ohren 8, 9 mittels der Befestigungselemente 12, 13 aneinander befestigt. Je nach Ausgestaltung der Gleitschutzvorrichtung 30 können einzelne Felgenschutzelemente unterschiedlich ausgestaltet sein. So können beispielsweise zwei Felgenschutzelemente 50 vorhanden sein, die etwas kürzer als die Felgenschutzelemente 1 sind, und nur jeweils ein Ohr aufweisen. Diese Felgenschutzelemente liegen bevorzugt benachbart zu einer Spanneinrichtung 39, die aufgrund ihrer Größe nicht mittels Ohren 8, 9 überbrückt werden kann. Ein weiteres Felgenschutzelement 51 kann mit einem verlängerten Ohr 52 versehen sein, um eine Stelle 53 des Spannmittels 38 zu überbrücken, an der eine Weitenanpassung des Spannmittels 38 an unterschiedlich große Fahrzeugräder 31 stattfindet.

### Bezugszeichen

- 1: Felgenschutzelement
- 2: Längsachse
- 3: Pfeil
- 4: Innenfläche
- 5: Außenfläche
- 6: Flügel
- 7: Flügel
- 8: Ohr
- 9: Ohr
- 10: Ecke
- 11: Ecke
- 12: Befestigungselement
- 13: Befestigungselement
- 14: Ecke
- 15: Ecke
- 16: Aussparung
- 17: Aussparung
- 18: Rand des Felgenschutzelements
- 19: Bereich um Längsachse
- 20: Verbindungselement
- 21: Verbindungselement
- 22: Aufnahme
- 30: Gleitschutzvorrichtung
- 31: Fahrzeugrad
- 32: Reifen
- 33: Felge
- 34: Laufnetz
- 35: Lauffläche
- 36: Radinnenseite
- 37: Radaußenseite
- 38: Spannmittel
- 39: Spanneinrichtung
- 40: Knotenstelle
- 41: Überlappungsbereich
- 42: Umfangsrichtung
- 50: modifiziertes Felgenschutzelement
- 51: modifiziertes Felgenschutzelement
- 52: verlängertes Ohr
- 53: Stelle des Spannmittels

## Patentansprüche

1. Felgenschutzelement (1) für eine Gleitschutzvorrichtung (30), wobei das Felgenschutzelement (1) um eine Längsachse (2) zusammenklappbar ausgestaltet ist und an aufeinander zu klappbaren Flügeln (6, 7) mit zueinander komplementären Verbindungselementen (20, 21) zum Zusammenhalt der Flügel (6, 7) versehen ist, **dadurch gekennzeichnet, dass** die Flügel (6, 7)
an jeweils entgegengesetzten Seiten in Richtung der Längsachse (2) vorspringende Ohren (8, 9) aufweisen, die mit zueinander komplementären Befestigungselementen (12, 13) zur Befestigung an einem weiteren Felgenschutzelement (1) versehen sind.

2. Felgenschutzelement (1) nach Anspruch 1, wobei der Flügel (6, 7) an der einem Ohr (8, 9) gegenüberliegenden Seite eine Aussparung (16, 17) aufweist.

3. Felgenschutzelement (1) nach Anspruch 2, wobei die Aussparung (16, 17) komplementär zu einem Ohr (8, 9) geformt ist.

4. Felgenschutzelement (1) nach einem der Ansprüche 1 bis 3, wobei bei zusammengeklapptem Felgenschutzelement (1) eine Innenfläche (4) des Ohrs (8, 9) von außen zugänglich ist.

5. Felgenschutzelement (1) nach Anspruch 4, wobei die von außen zugängliche Innenfläche (4) des Ohrs (8, 9) mit einem Befestigungselement (12, 13) versehen ist.

6. Felgenschutzelement (1) nach einem der Ansprüche 1 bis 5, wobei die Ohren (8, 9) sich bezüglich der Längsachse diagonal gegenüberliegen.

7. Felgenschutzelement (1) nach einem der Ansprüche 1 bis 6, wobei die Verbindungselemente (20, 21) sich über den größten Teil der Innenfläche (4) der Flügel (8, 9) erstrecken.

8. Felgenschutzelement (1) nach einem der Ansprüche 1 bis 7, wobei die Verbindungselemente (20, 21) und/oder die Befestigungselemente (12, 13) einen Klettverschluss aufweisen.

9. Felgenschutzelement (1) nach einem der Ansprüche 1 bis 8, wobei entlang der Längsachse (2) eine Aufnahme (22) für das Spannmittel (38) gebildet ist, deren Oberflächenbeschaffenheit sich von der Oberflächenbeschaffenheit der Flügel (8, 9) unterscheidet.

10. Felgenschutzelement (1) nach einem der Ansprüche 1 bis 9, wobei das Felgenschutzelement (1) aus einem biegeschlaffen Material gefertigt ist.

11. Felgenschutzelement (1) nach einem der Ansprüche 1 bis 10, wobei das Felgenschutzelement (1) eine rotationssymmetrische Grundfläche aufweist.

12. Anordnung mit einer Mehrzahl von Felgenschutzelementen nach einem der Ansprüche 1 bis 11, wobei ein Felgenschutzelement (1) mittels eines Ohrs (8) und dessen Befestigungselement (20) mit dem Ohr (9) und dessen Befestigungselement (21) des einen benachbarten Felgenschutzelements (1) und mittels seines anderen Ohrs (9) und dessen Befestigungselement (21) mit dem Ohr (8) und dessen Befestigungselement (20) des anderen benachbarten Felgenschutzelements (1) verbunden ist.

13. Anordnung nach Anspruch 12, wobei das Ohr (8, 9) des einen Felgenschutzelements (1) in die Aussparung (16, 17) des benachbarten Felgenschutzelements (1) ragt und dessen einen Flügel (6, 7) überlappt.

14. Gleitschutzvorrichtung (30) für Fahrzeugräder (31), mit einem zugmittelförmigen Spannmittel (38), das im montierten Zustand der Gleitschutzvorrichtung (30) auf einer Radaußenseite (37) sich in einer Umfangsrichtung (42) erstreckend liegt, wobei das Spannmittel (38) zumindest größtenteils mit einer Mehrzahl von Felgenschutzelementen (1) nach einem der Ansprüche 1 bis 11 abgedeckt ist, wobei in den Felgenschutzelementen (1) das Spannmittel (38) aufgenommen ist und wenigstens ein Ohr (8, 9) eines Felgenschutzelements (1) mit dem Flügel (6, 7) des benachbarten Felgenschutzelements (1) verbunden ist.

15. Gleitschutzvorrichtung (30) nach Anspruch 14, wobei wenigstens ein Felgenschutzelement (1) ein Ohr (51) aufweist, das im Vergleich zu den Ohren (8, 9) der übrigen Felgenschutzelemente verlängert ist.

16. Gleitschutzvorrichtung (30) nach Anspruch 14 oder 15, wobei das Ohr (8, 9) mit dem Flügel (6, 7) drehbar verbunden ist.

17. Satz mit einer Mehrzahl von Felgenschutzelementen (1) nach einem der Ansprüche 1 bis 11, wobei wenigstens ein Felgenschutzelement (1) ein gegenüber wenigstens einem weiteren Felgenschutzelement (1) verlängertes Ohr (51) aufweist.

## Claims

1. Rim protection element (1) for an anti-skid device (30), the rim protection element (1) being designed to be foldable about a longitudinal axis (2) and being provided with complementary connecting elements (20, 21) on flanks (6, 7) that can be folded towards one another, said connecting elements being provided for holding the flanks (6, 7) together, **characterised in that** the flanks (6, 7) comprise lugs (8, 9) which project on opposite sides in each case in the direction of the longitudinal axis (2) and are provided with complementary attachment elements (12, 13) for attachment to an additional rim protection element (1).

2. Rim protection element (1) according to claim 1, wherein the flanks (6, 7) comprise a recess (16, 17) on the side opposite a lug (8, 9).

3. Rim protection element (1) according to claim 2, wherein the shape of the recess (16, 17) is complementary to a lug (8, 9).

4. Rim protection element (1) according to any of claims 1 to 3, wherein an inner surface (4) of the lug (8, 9) is accessible from the outside when the rim protection element (1) is folded up.

5. Rim protection element (1) according to claim 4, wherein the inner surface (4) of the lug (8, 9) that is accessible from the outside is provided with an attachment element (12, 13).

6. Rim protection element (1) according to any of claims 1 to 5, wherein the lugs (8, 9) are diagonally opposite one another with regard to the longitudinal axis.

7. Rim protection element (1) according to any of claims 1 to 6, wherein the connecting elements (20, 21) extend over the majority of the inner surface (4) of the flanks (8, 9).

8. Rim protection element (1) according to any of claims 1 to 7, wherein the connecting elements (20, 21) and/or the attachment elements (12, 13) comprise a hook-and-loop fastener.

9. Rim protection element (1) according to any of claims 1 to 8, wherein a receptacle (22) for the tensioning means (38) is formed along the longitudinal axis (2), the surface quality of which differs from the surface quality of the flanks (8, 9).

10. Rim protection element (1) according to any of claims 1 to 9, wherein the rim protection element (1) is made of a flexible material.

11. Rim protection element (1) according to any of claims 1 to 10, wherein the rim protection element (1) has a rotationally symmetrical base.

12. Arrangement comprising a plurality of rim protection elements according to any of claims 1 to 11, wherein one rim protection element (1) is connected by means of one lug (8) and the attachment element (20) thereof to the lug (9) and the attachment element (21) thereof of one of the adjacent rim protection elements (1), and is connected by means of its other lug (9) and the attachment element (21) thereof to the lug (8) and the attachment element (20) thereof of the other adjacent rim protection element (1).

13. Arrangement according to claim 12, wherein the lug (8, 9) of one of the rim protection elements (1) protrudes into the recess (16, 17) in the adjacent rim protection element (1) and overlaps one of its flanks (6, 7).

14. Anti-skid device (30) for vehicle wheels (31), comprising a drawing means-shaped tensioning means (38), which rests on the outside (37) of a wheel so as to extend in a circumferential direction (42) when the anti-skid device (30) is mounted, wherein at least the majority of the tensioning means (38) is covered by a plurality of rim protection elements (1) according to any of claims 1 to 11, wherein the tensioning means (38) is housed in the rim protection elements (1) and at least one lug (8, 9) of a rim protection element (1) is connected to the flank (6, 7) of the adjacent rim protection element (1).

15. Anti-skid device (30) according to claim 14, wherein at least one rim protection element (1) comprises a lug (51) that is longer than the lugs (8, 9) of the other rim protection elements.

16. Anti-skid device (30) according to either claim 14 or claim 15, wherein the lug (8, 9) is rotatably connected to the flank (6, 7).

17. Set comprising a plurality of rim protection elements (1) according to any of claims 1 to 11, wherein at least one rim protection element (1) comprises a lug (51) that is longer than at least one additional rim protection element (1).

## Revendications

1. Elément de protection de jante (1) pour un dispositif antidérapant (30), dans lequel l'élément de protection de jante (1) est d'une configuration repliable autour d'un axe longitudinal (2), et est pourvu, sur des ailes (6, 7) pouvant être rabattues l'une sur l'autre, d'éléments de liaison (20, 21) mutuellement complémentaires pour assurer le maintien assemblé des ailes (6, 7),
**caractérisé en ce que** les ailes (6, 7) présentent sur des côtés respectivement opposés, des oreilles (8, 9) qui font saillie dans la direction de l'axe longitudinal (2), et qui sont pourvues d'éléments de fixation (12, 13) réciproquement complémentaires pour la fixation à un autre élément de protection de jante (1).

2. Elément de protection de jante (1) selon la revendication 1, dans lequel l'aile (6, 7) présente une encoche (16, 17) sur le côté opposé à une oreille (8, 9).

3. Elément de protection de jante (1) selon la revendication 2, dans lequel l'encoche (16, 17) est d'une forme complémentaire à celle d'une oreille (8, 9).

4. Elément de protection de jante (1) selon l'une des revendications 1 à 3, dans lequel pour un élément de protection de jante (1) replié sur lui-même, une surface intérieure (4) de l'oreille (8, 9) est accessible de l'extérieur.

5. Elément de protection de jante (1) selon la revendication 4, dans lequel la surface intérieure (4) de l'oreille (8, 9), accessible de l'extérieur, est pourvu d'un élément de fixation (12, 13).

6. Elément de protection de jante (1) selon l'une des revendications 1 à 5, dans lequel les oreilles (8, 9) sont opposées en diagonale par rapport à l'axe longitudinal.

7. Elément de protection de jante (1) selon l'une des revendications 1 à 6, dans lequel les éléments de liaison (20, 21) s'étendent sur la plus grande partie de la surface intérieure (4) des ailes (8, 9).

8. Elément de protection de jante (1) selon l'une des revendications 1 à 7, dans lequel les éléments de liaison (20, 21) et/ou les éléments de fixation (12, 13) comporte un système à éléments auto-agrippants.

9. Elément de protection de jante (1) selon l'une des revendications 1 à 8, dans lequel le long de l'axe longitudinal (2), est formé un logement d'accueil (22) pour le moyen tendeur (38), dont l'état de surface se distingue de l'état de surface des ailes (8, 9).

10. Elément de protection de jante (1) selon l'une des revendications 1 à 9, l'élément de protection de jante (1) étant fabriqué en un matériau souple en flexion.

11. Elément de protection de jante (1) selon l'une des revendications 1 à 10, l'élément de protection de jante (1) présentant une surface de base à symétrie de rotation.

12. Agencement comportant un grand nombre d'éléments de protection de jante selon l'une des revendications 1 à 11, dans lequel un élément de protection de jante (1) est relié, au moyen d'une oreille (8) et de son élément de fixation (20), à l'oreille (9) et son élément de fixation (21) de l'élément de protection de jante (1) voisin, et, au moyen de son autre oreille (9) et de son élément de fixation (21), à l'oreille (8) et son élément de fixation (20) de l'autre élément de protection de jante (1) voisin.

13. Agencement selon la revendication 12, dans lequel l'oreille (8, 9) dudit un élément de protection de jante (1) s'engage dans l'encoche (16, 17) de l'élément de protection de jante (1) voisin et chevauche une aile (6, 7) de celui-ci.

14. Dispositif antidérapant (30) pour roues de véhicules (31), comprenant un moyen tendeur (38) sous forme de moyen de traction, qui, dans l'état monté du dispositif antidérapant (30), est situé sur un côté extérieur (37) de la roue en s'étendant dans une direction périphérique (42), dispositif dans lequel le moyen tendeur (38) est recouvert au moins en grande partie, avec un grand nombre d'éléments de protection de jante (1) selon l'une des revendications 1 à 11, et dans lequel le moyen tendeur (38) est logé dans les éléments de protection de ante (1), et au moins une oreille (8, 9) d'un élément de protection de jante (1) est reliée à l'aile (6, 7) de l'élément de protection de jante (1) voisin.

15. Dispositif antidérapant (30) selon la revendication 14, dans lequel au moins un élément de protection de jante (1) comporte une oreille (51), qui est rallongée par rapport aux oreilles (8, 9) des autres éléments de protection de jante.

16. Dispositif antidérapant (30) selon la revendication 14 ou la revendication 15, dans lequel l'oreille (8, 9) est reliée de manière rotative à l'aile (6, 7).

17. Jeu ou kit constitué d'un grand nombre d'éléments de protection de jante (1) selon l'une des revendications 1 à 11, dans lequel au moins un élément de protection de jante (1) comporte une oreille (51) rallongée par rapport à au moins un autre élément de protection de jante (1).
